# FASCICULE DE BREVET EUROPEEN

(11) **EP 1 519 164 B1**
(45) Date de publication et mention de la délivrance du brevet: **07.06.2006**
(21) Numéro de dépôt: 04356151.3
(22) Date de dépôt: 02.09.2004
(51) Int. Cl.: G01G 21/22, G01G 19/44

(54) **Appareil de pesée**
Wägeeinrichtung
Weighing apparatus

(30) Priorité: 24.09.2003 FR 0311192
(43) Date de publication de la demande: 30.03.2005
(73) Titulaire: SEB S.A., 69130 Ecully (FR)
(72) Inventeur: Linglin, Benoît, 74350 Cruseilles (FR); Simond, Bénédicte, 74150 Bloye (FR); Juteau, Patrick, 74150 Rumilly (FR)
(74) Mandataire: Kiehl, Hubert

(56) Documents cités:
- EP-A- 0 749 718
- EP-A- 1 336 826
- US-A- 4 387 777
- US-A- 5 886 302
- "Bascule individuelle à cristaux liquides" INTER-ELECTRONIQUE., vol. 10, no. 165, mars 1975 (1975-03), page 27, XP002283952 CEP INFORMATION TECHNOLOGIE S.A. PARIS., FR

## Description

La présente invention est relative à un appareil de pesée du genre pèse-personne, pèse-bébé ou balance de ménage, notamment du type électronique comportant des jauges d'extensométrie associées à un circuit électronique de mesure délivrant un signal qui est fonction du poids à mesurer et elle concerne plus particulièrement un plateau de réception de poids apte à être utilisé avec un tel appareil.

Un appareil de pesée comprend en principe un plateau susceptible de recevoir le poids à mesurer, au moins un corps d'épreuve comportant sur l'une des faces des jauges d'extensométrie, l'une des extrémités de ce corps étant reliée au plateau et l'autre à un socle ou à un pied destiné à reposer sur une surface plane. Les deux extrémités de ce corps sont encastrées au plateau et au socle et elles délimitent une barre en un matériau élastique supportant les jauges de contrainte et déformable essentiellement par flexion sous l'effet du poids à peser. Les jauges sont reliées à un circuit électronique pour convertir les déformations subies par les jauges en signaux électriques et transformer ces derniers en valeurs numériques correspondant au poids mesuré.

Le plateau de pesée est réalisé généralement en un matériau rigide, apte à supporter des charges de compression et de traction afin de résister sans se déformer à la charge appliquée. Les appareils de pesée sont souvent placés dans une salle de bain ou sont amenés en contact avec de l'eau et des produits de nettoyage, ce qui requiert l'emploi d'un matériau résistant aux agressions chimiques pour le plateau de l'appareil de pesée.

L' appareil de pesée décrit dans le document US 5 886 302 utilise un plateau de réception de poids réalisé en verre. Le plateau est rectangulaire et il est soutenu aux quatre coins par des pieds renfermant les capteurs de poids. Afin de rendre le plateau complètement transparent, les connexions électriques sont agencées dans des canaux périphériques situés sur les bords latéraux du plateau, ce qui complique sa construction.

Le but de l'invention est un appareil de pesée présentant un plateau de réception de poids qui soit confortable au toucher, facile à nettoyer tout en présentant des propriétés esthétiques adaptées à son utilisation dans une salle de bain.

Un autre but de l'invention est un appareil de pesée dont le plateau soit au moins en partie transparent pour laisser apparaître des informations situées en dessous, tout en étant apte à réfléchir de manière diffuse la lumière tombant sur sa surface pour un meilleur confort visuel.

Un autre but de l'invention est un pèse-personne dont le plateau présente une apparence d'eau en mouvement, tout en étant de construction simple et facile à industrialiser pour des coûts moindres.

Ces buts sont réalisés avec un appareil de pesée comportant un plateau de réception de poids supporté par une base de pesée ou un socle, au moins une partie visible dudit plateau comportant une surface bosselée, du fait que ladite surface bosselée est métallique réfléchissant la lumière ou elle est recouverte au moins partiellement par un revêtement réfléchissant la lumière.

Par partie visible du plateau de réception de poids on comprend une partie transparente à la lumière, qui peut être regardée par l'utilisateur lorsque l'appareil est placé sur le sol ou sur un support en position d'utilisation.

Par surface bosselée on comprend en général une surface non plane, de préférence comportant plusieurs bosselures réparties de manière aléatairs sur sa surface. Une telle surface bosselée présente donc une alternance de courbes convexes et concaves réalisées dans le plan vertical de l'une des faces du plateau qui se succèdent selon plusieurs directions afin de recouvrir une zone prédéterminée de la surface du plateau.

Plus particulièrement selon l'invention, une telle surface est métallique réfléchissant la lumière ou elle est recouverte d'un revêtement réfléchissant la lumière de manière à ce que la lumière incidente soit renvoyée dans plusieurs directions. Un tel renvoi de lumière a pour effet d'éviter l'effet miroir d'un plateau plan, qui pourrait renvoyer l'image (peu gracieuse) de la personne en train de se peser ou celle de la lumière forte des spots du plafond d'une salle de bain. Cette surface arrive à cacher les connexions ou les autres composants de l'appareil situés en dessous, tout en offrant un aspect esthétique agréable.

De préférence, ladite surface bosselée comprend au moins 1 bosselure par environ 120 cm² de surface de plateau et la profondeur de ladite bosselure (8) est inférieure à 5 cm.

Il a été constaté, lors des tests effectués, qu'en choisissant ces valeurs de la "densité" des bosselures sur la surface d'un plateau, par exemple celui d'un pèse-personne, et de leur profondeur, l'image incidente n'est plus fidèle à l'image d'origine et que la lumière incidente est renvoyée de manière diffuse, pour une grande plage de valeurs de l'angle d'incidence.

De surcroît, ladite surface bosselée est réalisée par une alternance de courbes convexes et concaves dont le rayon au sommet est sensiblement différent de celui des bosses adjacentes, une telle surface permet d'obtenir une image donnant une impression d'eau en mouvement, s'intégrant très bien dans une salle d'eau.

Une telle surface bosselée peut être réalisée par moulage ou par une technique d'usinage, l'usinage du moule ou de la surface bosselée pouvant être réalisé par une machine à commande numérique apte à générer de manière aléatoire des sinusoïdes d'une amplitude prédéterminée et de longueur préétablie, selon des directions différentes dans un plan vertical. Dans une variante, au cas où une tôle métallique (par exemple en étain, en aluminium, en cuivre, en acier) serait utilisée pour matérialiser la surface bosselée, elle pourrait être façonnée par froissage ou par martelage avant d'être intégrée au plateau.

De préférence, ledit plateau est réalisé en un matériau transparent et ledit revêtement est appliqué sur la face inférieure bosselée du plateau.

On aurait pu certes envisager un plateau dont la face supérieure comprend une surface bosselée métallique réfléchissant la lumière ou recouverte de matériau réfléchissant la lumière, ce qui aurait permis d'utiliser un support en un matériau opaque, recouvert en surface par un tel revêtement réfléchissant la lumière. Dans une variante de réalisation de l'invention, on aurait pu également utiliser cette surface externe réalisée en un matériau électriquement isolant et recouverte d'un tel revêtement réfléchissant la lumière pour matérialiser des électrodes d'excitation et de mesure de l'impédance bioélectrique rendant ainsi l'appareil utilisable en tant qu'appareil de mesure de la composition corporelle d'un individu en contact avec ces électrodes.

On préfère toutefois réaliser le plateau de réception de poids en un matériau transparent (qui peut être coloré ou incolore) dont la face supérieure sert de support pour l'utilisateur ou le poids à peser, alors que la face inférieure présente une surface bosselée réfléchissant la lumière. Ceci permet d'obtenir une surface d'appui du plateau qui soit lisse ou qui présente un galbe conforme à celui des pieds de l'utilisateur, sans protubérance, ce qui assure plus de confort, évite l'accumulation de l'eau sur sa face supérieure et facilite grandement le nettoyage.

Utilement, ledit revêtement est un dépôt métallique ou une couche de peinture d'une épaisseur comprise entre 0,1 µm et 100µm.

Un tel dépôt métallique, par exemple à base d'aluminium, d'argent, d'or, etc. peut être avantageusement réalisé par une technique de trempage, par évaporation sous vide d'air, par pyrolyse, par pulvérisation sous vide. Dans une variante à bosselures peu profondes, la couche de peinture peut avantageusement être appliquée par sérigraphie ou par pulvérisation.

Avantageusement, ledit revêtement est appliqué sur toute la surface dudit plateau hormis sur une épargne laissant apparaître un afficheur situé en dessous.

Ceci permet d'obtenir un appareil compact, comportant de bonnes propriétés esthétiques, uniquement les indications de l'afficheur étant visibles à travers le revêtement réfléchissant, les autres composants internes de l'appareil (les connexions, les capteurs, etc.) étant cachés.

Dans une variante de réalisation de l'invention, ledit revêtement est du type miroir semi-réfléchissant appliqué sur toute la surface dudit plateau et l'appareil comporte un afficheur à LED agencé en dessous. Un afficheur de type LCD à retro éclairage peut également être envisagé dans ce cas.

Ceci permet de simplifier la réalisation du plateau en appliquant le revêtement sur toute la surface du plateau, ce qui a pour effet de cacher les composants internes de l'appareil, tout en permettant à l'afficheur d'être visible lorsqu'il est mis en marche.

Dans une variante de réalisation de l'invention, ledit plateau est réalisé à base de deux plaques superposées qui prennent en sandwich une feuille métallique, où la plaque supérieure est réalisée en un matériau transparent et comporte une surface bosselée en sa partie inférieure orientée vers ladite feuille métallique.

Ceci permet une réalisation simplifiée tout en conservant les mêmes avantages que les précédentes.

L'invention concerne plus particulièrement un pèse-personne électronique comportant un plateau de réception de poids supporté par une base de pesée ou un socle, au moins une partie dudit plateau comportant une surface bosselée selon l'invention.

L'invention sera mieux comprise à l'étude des modes de réalisation pris à titre nullement limitatif et illustrés dans les figures annexées dans lesquelles :
- la figure 1 est une vue de dessus du plateau d'un appareil de pesée selon l'invention;
- la figure 2 est une vue en coupe axiale du plateau de la figure 1;
- la figure 3 est une vue en perspective d'un appareil de pesée selon l'invention;
- la figure 4a est une vue frontale et la figure 4b est une vue latérale de l'appareil de pesée de la figure 3.

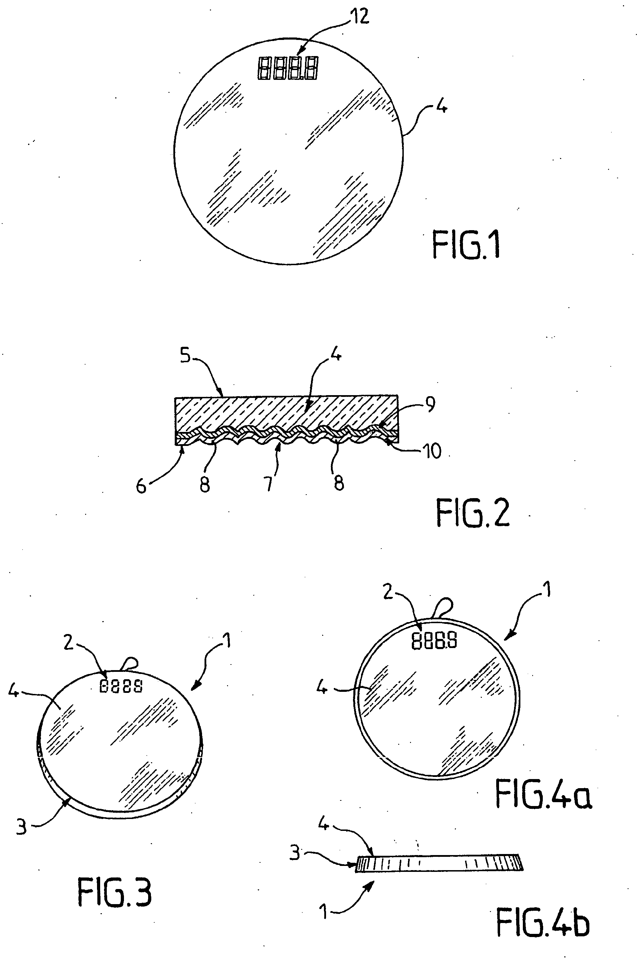

Dans les figures 3, 4a et 4b est représenté un appareil de pesée du type pèse-personne électronique comprenant un plateau 4 destiné à recevoir le poids à mesurer et qui est supporté par un socle 3. Un ou plusieurs capteurs de poids sont montés entre le plateau 4 et le socle 3. Un tel capteur de poids comporte généralement une barre de flexion à jauges d'extensométrie, barre de flexion montée en porte à faux entre une partie de support du plateau 4 et une autre partie prenant appui sur le socle 3. Les jauges d'extensométrie sont montées sur l'une des faces de la barre de flexion et sont reliées par un montage en pont de Wheatstone au circuit électronique de commande de l'appareil pour convertir les déformations subies par les jauges en signaux électriques, transformer ces derniers en valeurs numériques correspondant au poids mesuré et les afficher. Un afficheur 2 à LCD ou à LED disposé sous le plateau 4 permet de visualiser la valeur mesurée du poids.

Le plateau 4, tel que mieux visible à la figure 2, est réalisé en un matériau transparent, par exemple en verre ou en une matière plastique transparente (une résine acrylique, par exemple du polyméthacrylate), matériau transparent qui peut être incolore ou coloré, par exemple en bleu ou vert. La face supérieure 5 du plateau 4 présente une surface lisse ou dispose d'un galbe permettant de s'adapter à la morphologie de la plante des pieds. La face inférieure 6 du plateau présente une surface bosselée 7 qui comporte des ondulations dans un plan vertical. Les ondulations, vues en section axiale tel que représenté à la figure 2, sont une alternance de courbes concaves et convexes, par exemple des sinusoïdes, qui s'étendent sensiblement sur toute la face inférieure 6 du plateau 4. La profondeur d'une bosselure 8 est inférieure à 50 mm, de préférence comprise entre 1 mm et 20 mm, au moins 10 bosselures étant prévues pour un plateau circulaire de diamètre d'environ 350 mm ou pour un plateau carré dont le côté est de 350 mm. Il faut remarquer que plus le nombre de bosselures est important, plus la lumière sera renvoyée de manière diffuse par le plateau.

Pour un meilleur confort visuel, la différence des rayons entre deux bosselures adjacentes est supérieure à 20%, ceci étant réalisé en alternance, dans un sens ou dans l'autre. Un tel plateau recouvert de revêtement réfléchissant est alors apte à réfléchir de manière plus diffuse la lumière incidente qu'une surface ayant des bosselures de même grandeur, se succédant à intervalles réguliers sur la face du plateau.

Le plateau 4 présentant une telle configuration peut être réalisé par moulage ou par une technique d'usinage. L'usinage du plateau 4 ou du moule pourraient ainsi se faire avantageusement sur une machine à commande numérique en programmant la génération aléatoire de sinusoïdes de longueur et d'amplitude donnée dans le plan vertical de la face inférieure 6 du plateau 4.

Dans un premier mode de réalisation de l'invention, la face inférieure 6 du plateau 4 ainsi obtenue est ensuite enduite d'un revêtement 9 réfléchissant la lumière, par exemple par un dépôt métallique telle une pellicule d'aluminium, d'argent, d'or ou un autre métal conducteur. Un tel dépôt peut être réalisé par exemple par trempage, par évaporation sous vide d'air, par pyrolyse, par pulvérisation sous vide, etc. L'épaisseur d'un tel dépôt est de l'ordre du micron. Dans une variante, le revêtement 9 réfléchissant la lumière peut être une couche de peinture métallisée appliquée par exemple par pulvérisation sur la surface bosselée 7. Une telle peinture métallisée peut être argentée ou dorée ou alors teintée, par exemple en vert ou en bleu.

Le revêtement 9 réfléchissant la lumière est ensuite recouvert d'une couche de protection 10. Dans une variante, cette couche de protection peut être un tain de miroir réalisé par un dépôt de cuivre ou de plomb rendant opaque la surface du plateau. Dans une autre variante de réalisation, la couche de protection 10 peut être une couche de peinture ou de vernis apte à résister aux agressions physiques et chimiques, peintures ou vernis qui peuvent être opaques ou transparents. Avantageusement, un vernis transparent appliqué sur le revêtement 9 réfléchissant la lumière fait office de miroir sans tain ou semi-réfléchissant rendant visible l'indication d'un afficheur à LED situé en dessous.

Dans un deuxième mode de réalisation de l'invention, la face inférieure 6 du plateau 4 réalisé en un matériau transparent est pressée contre une feuille métallique de faible épaisseur, par exemple une feuille d'aluminium ayant une épaisseur de l'ordre de quelques centièmes de mm. La feuille métallique matérialisant le revêtement 9 est supportée par une plaque inférieure dont la face en regard de la feuille métallique a la forme négative de celle de la face inférieure 6 du plateau 4. Le plateau du pèse-personne est ainsi constitué par l'assemblage d'une plaque supérieure transparente et d'une plaque inférieure (qui, elle, peut être opaque) plaques qui prennent en sandwich la feuille de métal et la déforment selon leurs bosselures respectives.

L'afficheur 2 de l'appareil peut être agencé à côté du plateau de réception de poids de l'appareil ou il peut être disposé en dessous, à l'intérieur de l'appareil. Pour rendre visible l'indication d'un afficheur 2 disposé sous le plateau 4, une épargne 12 (figure 1) doit être réalisée dans le revêtement 9. Une telle épargne 12 peut être totale sur l'ensemble de l'afficheur, par exemple sous forme d'un rectangle dans lequel sont inscrits tous les chiffres de l'afficheur, ou alors elle peut être sélective, en découvrant seulement les zones lumineuses, à savoir les segments de l'afficheur (sept segments constituent un chiffre, l'afficheur comportant quatre chiffres à sept segments et un point de séparation des décimales), tel que visible à la figure 1. Une telle épargne peut être réalisée grâce à un masque qui est appliqué sur une partie, de préférence plane, de la face inférieure 6 du plateau 4 avant le dépôt du revêtement 9 ou grâce à une attaque chimique ou mécanique dudit revêtement 9 une fois appliqué sur le plateau 4. De préférence, une zone plane ayant des dimensions correspondantes à celles de l'afficheur 2 est réalisée sur une partie de la surface bosselée 7 afin de permettre une mise en place correcte de l'afficheur sous le plateau 4, ainsi qu'une bonne visualisation des indications de l'afficheur à travers l'épaisseur du plateau 4.

Dans un deuxième mode de réalisation où l'on utilise une feuille métallique comme revêtement réfléchissant la lumière, on prévoit une découpe de la feuille métallique pour former une épargne comme précédemment décrit, avant que la feuille soit prise en sandwich entre les deux plaques supérieure et inférieure du plateau.

Dans une variante de l'invention, l'épargne est réalisée par dépôt d'un vernis transparent recouvrant l'ensemble de l'afficheur, voire l'ensemble du plateau, laissant apparaître à travers le plateau 4 les indications d'un afficheur à LED lorsqu'il est allumé.

D'autres variantes et modes de réalisation de l'invention peuvent être réalisés sans sortir du cadre de ces revendications. Ainsi, on peut utiliser une tôle métallique froissée ou martelée de manière à présenter des ondulations disposées de manière aléatoire sur sa surface, tôle maintenue par un support au moins en sa périphérie, l'ensemble feuille et support étant recouvert par un couvercle en un matériau transparent ménageant à l'intérieur un espace creux de profondeur supérieure à celle des bosselures de la tôle en dessous.

## Revendications

1. Appareil de pesée (1) comportant un plateau (4) de réception de poids supporté par une base de pesée ou un socle (3), au moins une partie visible dudit plateau (4) comportant une surface bosselée (7), **caractérisé en ce que** ladite surface bosselée (7) est métallique réfléchissant la lumière ou elle est recouverte au moins partiellement par un revêtement (9) réfléchissant la lumière.

2. Appareil selon la revendication 1, **caractérisé en ce que** ladite surface bosselée (7) comprend au moins 1 bosselure (8) par environ 120 cm² de surface de plateau et **en ce que** la profondeur de ladite bosselure (8) est inférieure à 5 cm.

3. Appareil selon l'une des revendications 1 ou 2, **caractérisé en ce que** ladite surface bosselée (7) est réalisée par une alternance de courbes convexes et concaves dont le rayon au sommet est sensiblement différent de celui des bosses adjacentes.

4. Appareil selon l'une des revendications précédentes, **caractérisé en ce que** ledit plateau (4) est réalisé en un matériau transparent et que ledit revêtement (9) est appliqué sur la face inférieure (6) bosselée du plateau (4).

5. Appareil selon l'une des revendications précédentes, **caractérisé en ce que** ledit revêtement (9) est un dépôt métallique ou une couche de peinture d'une épaisseur comprise entre 0,1 *µ*m et 100 *µ*m.

6. Appareil selon l'une des revendications précédentes, **caractérisé en ce que** ledit revêtement (9) est appliqué sur toute la surface dudit plateau (4) hormis sur une épargne (12) laissant apparaître un afficheur (2) situé en dessous.

7. Appareil selon l'une des revendications 1 à 5, **caractérisé en ce que** ledit revêtement (9) est du type miroir semi-réfléchissant appliqué sur toute la surface dudit plateau et que l'appareil comporte un afficheur (2) à LED agencé en dessous.

8. Appareil selon l'une des revendications 1 à 3, **caractérisé en ce que** ledit plateau (4) est réalisé à base de deux plaques superposées qui prennent en sandwich une feuille métallique, où la plaque supérieure est réalisée en un matériau transparent et comporte une surface bosselée en sa partie inférieure orientée vers ladite feuille métallique.

9. Pèse-personne électronique comportant un plateau (4) de réception de poids supporté par une base de pesée ou un socle (3), au moins une partie dudit plateau (4) comportant une surface bosselée (7) selon l'une des revendications précédentes.

## Claims

1. A weighing appliance (1) comprising a weight-receiver platform (4) supported by a base or stand (3), at least a visible portion of said platform (4) having a bumpy surface (7), the appliance being **characterized in that** said bumpy surface (7) is metallic and light-reflecting, or is covered at least in part by a light-reflecting coating (9).

2. An appliance according to claim 1, **characterized in that** said bumpy surface (7) includes at least one bump (8) per approximately 120 cm² of the surface of the platform, and **in that** the depth of said bump (8) is less than 5 cm.

3. An appliance according to claim 1 or claim 2, **characterized in that** said bumpy surface (7) is constituted by alternating convex and concave curves of radius at the apex that differs substantially between adjacent bumps.

4. An appliance according to any preceding claim, **characterized in that** said platform (4) is made of a transparent material and that said coating (9) is applied to the bumpy bottom face (6) of the platform (4).

5. An appliance according to any preceding claim, **characterized in that** said coating (9) is a deposit of metal or a layer of paint having a thickness lying in the range 0.1 µm to 100 µm.

6. An appliance according to any preceding claim, **characterized in that** said coating (9) is applied over the entire surface of said platform (4) apart from a reserved area (12) revealing a display (2) situated underneath.

7. An appliance according to any one of claims 1 to 5, **characterized in that** said coating (9) is of the semi-reflecting mirror type and is applied over the entire surface of said platform, the appliance including an LED display (2) arranged beneath it.

8. An appliance according to any one of claims 1 to 3, **characterized in that** said platform (4) is built up from two superposed plates having a metal sheet sandwiched between them, in which the top plate is made of a transparent material and includes a bumpy surface on its bottom portion facing towards each metal sheet.

9. Electronic bathroom scales comprising a weight-receiver platform (4) supported by a base or stand (3), at least a portion of said platform (4) including a bumpy surface (7) according to any preceding claim.

## Patentansprüche

1. Wiegevorrichtung (1) mit einer Platte (4) zur Aufnahme von Gewicht, die von einer Wiegebasis oder einem Sockel (3) gestützt ist, wobei mindestens ein sichtbarer Teil der Platte (4) eine mit Vertiefungen versehene Oberfläche (7) aufweist, **dadurch gekennzeichnet, dass** die mit Vertiefungen versehene Oberfläche (7) aus lichtreflektierendem Metall besteht oder wenigstens teilweise mit einem lichtreflektierenden Überzug bedeckt ist.

2. Vorrichtung nach Anspruch 1, **dadurch gekennzeichnet, dass** die mit Vertiefungen versehene Oberfläche (7) mindestens 1 Vertiefung (8) pro jeweils 120 cm² der Oberfläche der Platte aufweist, und dass die Tiefe der Vertiefung (8) kleiner als 5 cm ist.

3. Vorrichtung nach einem der Ansprüche 1 oder 2, **dadurch gekennzeichnet, dass** die mit Vertiefungen versehene Oberfläche (7) durch eine Abfolge von konvexen und konkaven Kurven gebildet ist, deren Scheitelradius im wesentlichen verschieden von demjenigen der angrenzenden Erhebungen ist.

4. Vorrichtung nach einem der vorhergehenden Ansprüche, **dadurch gekennzeichnet, dass** die Platte (4) aus einem transparenten Material hergestellt und der Überzug (9) auf der mit Vertiefungen versehenen Unterseite (6) der Platte (4) angebracht ist.

5. Vorrichtung nach einem der vorhergehenden Ansprüche, **dadurch gekennzeichnet, dass** der Überzug (9) ein Metallüberzug oder eine Lackschicht mit einer Dicke zwischen 0,1 µm und 100 µm ist.

6. Vorrichtung nach einem der vorhergehenden Ansprüche, **dadurch gekennzeichnet, dass** der Überzug (9) auf der ganzen Fläche der Platte (4) außer auf einer Aussparung (12) angebracht ist, die eine unterhalb angeordnete Anzeige (2) erscheinen lässt.

7. Vorrichtung nach einem der Ansprüche 1 bis 5, **dadurch gekennzeichnet, dass** der Überzug (9) vom Typ eines halbreflektierenden Spiegels ist, der auf der ganzen Fläche der Platte angebracht ist, und dass die Vorrichtung eine darunter angeordnete LED-Anzeige (2) aufweist.

8. Vorrichtung nach einem der Ansprüche 1 bis 3, **dadurch gekennzeichnet, dass** die Platte auf der Grundlage von zwei übereinanderliegenden Scheiben gebildet ist, die eine Metallfolie zwischen sich sandwichartig aufnehmen, wobei die obere Scheibe aus einem transparenten Material besteht und an ihrer der Metallfolie zugewandten Unterseite eine mit Vertiefungen versehene Oberfläche aufweist.

9. Elektronische Personenwaage mit einer Platte (4) zur Aufnahme von Gewicht, die von einer Wiegebasis oder einem Sockel (3) gestützt ist, wobei mindestens ein Teil der Platte (4) die gehämmerte Oberfläche (7) nach einem der vorhergehenden Ansprüche aufweist.
